# EUROPÄISCHE PATENTANMELDUNG

(11) **EP 2 642 009 A1**
(43) Veröffentlichungstag der Anmeldung: **25.09.2013**
(21) Anmeldenummer: 12160715.4
(22) Anmeldetag: 22.03.2012
(51) Int. Cl.: D04H 1/56, D04H 1/4226, C03B 37/16, D01G 1/04

(54) **Vorrichtung zur Herstellung von geschnittenen Glasfasern**

(71) Anmelder: Dietze&Schell Maschinenfabrik GmbH&Co. Kg, 96450 Coburg (DE)
(72) Erfinder: Singer, Ulrich, 96487 Dörfles Esbach (DE)
(74) Vertreter: Rupprecht, Kay

(57) **Zusammenfassung**

Die vorliegende Erfindung betrifft eine Vorrichtung (10) zur Herstellung von geschnittenen Glasfasern (CG), wobei die Vorrichtung (10) zumindest ein erstes Treibrad (20) und zumindest ein zweites Treibrad (30), einen ersten Messerkopf (50) und einen zweiten Messerkopf (60) aufweist, wobei die Vorrichtung (10) derart beschaffen ist, dass sie in mindestens einer ersten Betriebsart betriebsfähig ist, bei der zumindest eines der Treibräder (20, 30) und zumindest einer der Messerköpfe (50, 60) imstande sind, Glasfasern (CG) von einem Garn (Y), vorzugsweise von einem Endlosgarn (Y), inline zu schneiden.

## Beschreibung

Die vorliegende Erfindung betrifft eine Vorrichtung zur Herstellung von geschnittenen Glasfasern.

Für die inline Herstellung von geschnittenen Glasfasern werden Maschinen verwendet, die mit einem Treibrad und einem Messerkopf ausgerüstet sind. Diese Maschinen sind so genannte Chopper.

Der Messerkopf wird durch das rotierende Treibrad mittels Reibung angetrieben. Von einer Glasfasergarn-Spinnmaschine wird dem Chopper mindestens ein Glasfasergarn zugeführt, das von der Maschine durch mehrere Zylinder und/oder Räder behandelt und durch den Messerkopf geschnitten wird.

Weil der Messerkopf und das Treibrad wegen der Antriebsart des Messerkopfes und aufgrund normalen Verschleißes, der durch den Schneidvorgang der Glasfasern verursacht wird, Abriebverschleiß ausgesetzt sind, müssen der Messerkopf und das Treibrad von Zeit zu Zeit ausgewechselt werden. Sowohl der Messerkopf als auch das Treibrad sind die markantesten Verschleißteile des Choppers, weil diese Teile direkt in den Schneidvorgang einbezogen sind und somit übermäßigem Verschleiß und Belastungen ausgesetzt werden.

Bei einem Auswechselungsvorgang des Treibrades und des Messerkopfes muss die gesamte Maschine angehalten und somit der Produktionsprozess der Herstellung von geschnittenen Glasfasern unterbrochen werden.

Es ist deshalb eine Aufgabe der vorliegenden Erfindung, eine Vorrichtung zur Herstellung von geschnittenen Glasfasern insbesondere dadurch zu verbessern, dass die Auswechselung des Treibrades und des Messerkopfes vereinfacht wird und dass die Unterbrechungszeit des Choppers während der Auswechselung des Treibrades und des Messerkopfes verringert wird.

Die oben genannte Aufgabe wird nach der vorliegenden Erfindung durch die Vorrichtung gemäß Anspruch 1 gelöst. Danach ist vorgesehen, dass eine Vorrichtung zur Herstellung von geschnittenen Glasfasern bereitgestellt wird, wobei die Vorrichtung zumindest ein erstes Treibrad und zumindest ein zweites Treibrad, einen ersten Messerkopf und einen zweiten Messerkopf aufweist, wobei die Vorrichtung derart beschaffen ist, dass sie in mindestens einer ersten Betriebsart betriebsfähig ist, bei der zumindest eines der Treibräder und zumindest einer der Messerköpfe imstande sind, Glasfasern von einem Garn, vorzugsweise von einem Endlosgarn, inline zu schneiden.

Die Vorrichtung zur Herstellung von geschnittenen Glasfasern kann ein so genannter Chopper sein, zum Beispiel vorzugsweise ein automatischer Chopper für die Herstellung von geschnittenen Glasfasern mehr oder weniger direkt nach der Spinndüse der Spinnmaschine.

Dadurch wird der Vorteil erreicht, dass mindestens das eine Paar von Treibrad und Messerkopf arbeiten kann und zum Schneiden eines Garns verwendet werden kann. Das andere Paar von Treibrad und Messerkopf befindet sich in einem Ruhezustand und kann somit leicht ausgewechselt werden. Es ist möglich, dass das Treibrad und der Messerkopf, die in Betrieb sind, ausgewechselt werden können, so dass das Treibrad und der Messerkopf, die nicht in Betrieb sind, für den Schneidvorgang verwendet werden können.

Das Garn oder, wie es auch möglich ist, eine Vielzahl von gesponnenen Fäden kann durch mindestens eine Spinnmaschine bereitgestellt werden, die eine oder mehrere Spinndüsen aufweist. Speziell wird die Auswechselung von Treibrad und Messerkopf vereinfacht, und die Unterbrechungszeit der Vorrichtung zur Herstellung von geschnittenen Glasfasern während einer Auswechselung des Treibrades und des Messerkopfes wird reduziert.

Es ist insbesondere möglich, dass das erste Treibrad und das zweite Treibrad auf einem Treibrad-Drehteller angebracht werden, wodurch der Treibrad-Drehteller aus einer ersten Stellung in eine zweite Stellung und aus der zweiten Stellung in die erste Stellung bewegbar ist. Durch den Treibrad-Drehteller wird der Wechsel der Stellungen des ersten und des zweiten Treibrades vereinfacht.

Außerdem kann die erste Stellung des Treibrad-Drehtellers eine Position sein, bei der sich das erste Treibrad in einer Arbeitsstellung zum inline Schneiden von Glasfasern befindet und/oder dass sich die zweite Stellung des Treibrades in einer Position befinden kann, in der sich das zweite Treibrad in einer Arbeitsstellung zum inline Schneiden von Glasfasern befindet.

Zusätzlich ist es möglich, dass die erste Stellung des Treibrad-Drehtellers eine Position ist, in der sich das zweite Treibrad in einer Ruhestellung befindet und abnehmbar ist und/oder dass die zweite Stellung des Treibrad-Drehtellers eine Position ist, in der sich das erste Treibrad in einer Ruhestellung befindet und abnehmbar ist, wobei das zweite Treibrad vorzugsweise in der ersten Stellung des Treibrad-Drehtellers durch zumindest eine Sicherheitstür zugänglich ist und/oder wodurch das erste Treibrad vorzugsweise in der zweiten Stellung des Treibrad-Drehtellers durch die zumindest eine Sicherheitstür zugänglich ist. Die Sicherheitstür(en) kann (können) z. B. mit einer Steuereinrichtung der Vorrichtung gekoppelt sein, die so gestaltet ist, dass die Sicherheitstür in einem unsicheren Zustand zum Öffnen, z. B. bei der Rotation des Treibrad-Drehtellers, verschlossen wird.

Darüber hinaus ist es möglich, dass der Treibrad-Drehteller um eine Treibrad-Drehtellerachse drehbar ist, und dass das erste Treibrad um eine erste Treibradachse drehbar ist und das zweite Treibrad um eine zweite Treibradachse drehbar ist, wobei die Treibrad-Drehtellerachse, die erste Treibradachse und die zweite Treibradachse im Wesentlichen parallel sind.

Außerdem ist es möglich, dass der erste Messerkopf und der zweite Messerkopf auf einem Messerkopf-Drehteller montiert werden, wobei der Messerkopf-Drehteller aus einer ersten Stellung in eine zweite Stellung und aus der zweiten Stellung in die erste Stellung bewegbar ist.

Es ist ferner möglich, dass die erste Stellung des Messerkopf-Drehtellers eine Position ist, in der sich der erste Messerkopf in einer Arbeitsstellung zum inline Schneiden von Glasfasern befindet und/oder dass die zweite Stellung des Messerkopf-Drehtellers eine Position ist, in der sich der zweite Messerkopf in einer Arbeitsstellung zum inline Schneiden von Glasfasern befindet.

Vorzugsweise kann die erste Stellung des Messerkopf-Drehtellers eine Position sein, in der sich der zweite Messerkopf in einer Ruhestellung befindet und abnehmbar ist und/oder dass die zweite Stellung des Messerkopf-Drehtellers eine Position sein kann, in der sich der erste Messerkopf in einer Ruhestellung befindet und abnehmbar ist, wobei der zweite Messerkopf vorzugsweise in der ersten Stellung des Messerkopf-Drehtellers durch zumindest eine Sicherheitstür zugänglich ist und/oder wobei der erste Messerkopf vorzugsweise in der zweiten Stellung des Messerkopf-Drehtellers durch die zumindest eine Sicherheitstür zugänglich ist.

Zusätzlich ist es möglich, dass der Messerkopf-Drehteller um eine Messerkopf-Drehtellerachse drehbar ist und dass der erste Messerkopf um eine erste Messerkopfachse drehbar ist und der zweite Messerkopf um eine zweite Messerkopfachse drehbar ist, wobei die Messerkopf-Drehtellerachse, die erste Messerkopfachse und die zweite Messerkopfachse im Wesentlichen parallel sind.

Darüber hinaus ist es möglich, dass die Vorrichtung zumindest eine nicht angetriebene Rolle umfasst, wobei die nicht angetriebene Rolle so gestaltet ist, dass das Garn durch die nicht angetriebene Rolle geführt werden kann. Außerdem kann die Vorrichtung zumindest eine bewegbare, nicht angetriebene Rolle umfassen, die aus zumindest einer ersten Stellung in eine zweite Stellung und umgekehrt bewegbar ist.

Es ist möglich, dass die bewegbare, nicht angetriebene Rolle so gestaltet ist, dass das Garn durch Bewegung aus der ersten Stellung in die zweite Stellung in das in Ruhestellung befindliche Treibrad geführt wird, vorzugsweise während des automatischen Umschaltprozesses, wenn vom ersten Treibrad zum zweiten Treibrad oder vom zweiten Treibrad zum ersten Treibrad gewechselt wird und/oder dass die bewegbare, nicht angetriebene Rolle so gestaltet ist, dass das Garn durch Bewegung aus der ersten Stellung in die zweite Stellung in das in Arbeitsstellung befindliche Treibrad zum inline Schneiden von Glasfasern geführt wird, vorzugsweise beim automatischen Ingangsetzen des Einsetz- und Schneidvorgangs des Garnes.

Darüber hinaus ist es möglich, dass die Vorrichtung zumindest eine Gruppe von mindestens zwei Führungswalzen aufweist, wobei die Führungswalzen so gestaltet sind, dass sie das Garn vorzugsweise beim automatischen Ingangsetzen des Einsetz- und Schneidvorgangs des Garnes ziehen können.

Zusätzlich kann die Vorrichtung zumindest eine bewegbare Druckrolle umfassen, die aus zumindest einer ersten Stellung in eine zweite Stellung und umgekehrt bewegbar ist, wobei die bewegbare Druckrolle vorzugsweise so gestaltet ist, dass das Garn durch Bewegung aus der ersten Stellung in die zweite Stellung in das sich in Arbeitsstellung befindliche Treibrad zum inline Schneiden von Glasfasern vorzugsweise beim automatischen Ingangsetzen des Einsetz- und Schneidvorgangs des Garnes geführt wird.

Es ist ferner möglich, dass die Vorrichtung zumindest einen Schwingkamm aufweist, der so gestaltet ist, dass das eintretende Garn durch den Schwingkamm geführt wird.

Weitere Einzelheiten und Vorteile der vorliegenden Erfindung werden im Folgenden mit Bezug auf die Zeichnungen beschrieben. Es zeigen:
- FIG. 1:: eine schematische Zeichnung eines Choppers nach der vorliegenden Erfindung;
- FIG. 2:: eine schematische Zeichnung der Anordnung des Messerkopfes und des Treibrades des Choppers nach der vorliegenden Erfindung;
- FIG. 3:: eine weitere schematische Zeichnung der Anordnung des Messerkopfes und des Treibrades des Choppers nach der vorliegenden Erfindung;
- FIG. 4:: eine weitere schematische Zeichnung des Choppers nach der vorliegenden Erfindung;
- FIG. 5:: eine weitere schematische Zeichnung des Choppers nach der vorliegenden Erfindung während des automatischen Anlegens eines ersten Faserbündels in einem ersten Schritt;
- FIG. 6:: eine weitere schematische Zeichnung des Choppers nach der vorliegenden Erfindung während des automatischen Anlegens eines ersten Faserbündels in einem zweiten Schritt;
- FIG. 7:: eine weitere schematische Zeichnung des Choppers nach der vorliegenden Erfindung während des automatischen Anlegens eines ersten Faserbündels in einem dritten Schritt;
- FIG. 8:: eine weitere schematische Zeichnung des Choppers nach der vorliegenden Erfindung während des Schneidvorgangs;
- FIG. 9:: eine weitere schematische Zeichnung des Choppers nach der vorliegenden Erfindung während des automatischen Anlegens eines Faserbündels beim Schneiden in einem ersten Schritt;
- FIG. 10:: eine weitere schematische Zeichnung des Choppers nach der vorliegenden Erfindung während des automatischen Anlegens eines Faserbündels beim Schneiden in einem zweiten Schritt;
- FIG. 11:: eine weitere schematische Zeichnung des Choppers nach der vorliegenden Erfindung während des automatischen Anlegens eines Faserbündels beim Schneiden in einem dritten Schritt;
- FIG. 12:: eine weitere schematische Zeichnung des Choppers nach der vorliegenden Erfindung während des automatischen Wechsels in einem ersten Schritt;
- FIG. 13:: eine weitere schematische Zeichnung des Choppers nach der vorliegenden Erfindung während des automatischen Wechsels in einem zweiten Schritt;
- FIG. 14:: eine weitere schematische Zeichnung des Choppers nach der vorliegenden Erfindung während des automatischen Wechsels in einem dritten Schritt;
- FIG. 15:: eine weitere schematische Zeichnung des Choppers nach der vorliegenden Erfindung während des automatischen Wechsels in einem vierten Schritt;
- FIG. 16:: eine weitere schematische Zeichnung des Choppers nach der vorliegenden Erfindung bei einer Auswechselung des Messerkopfes und des Treibrades während des Betriebes;
- FIG. 17a, b:: eine Darstellung von Einzelheiten des Treibrades; und
- FIG. 18:: eine alternative Ausführungsform, die mit Motor angetriebene Messerköpfe aufweist.

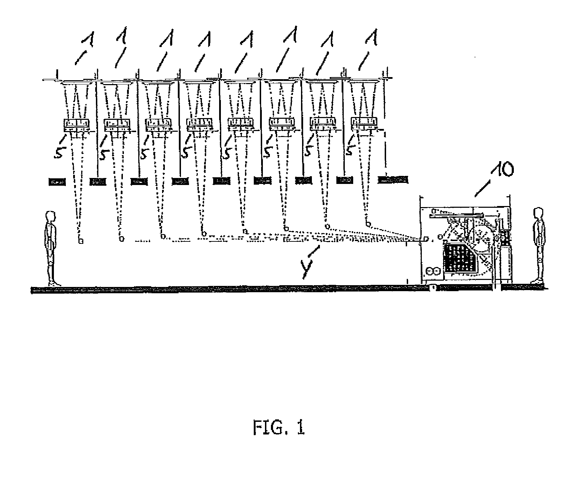

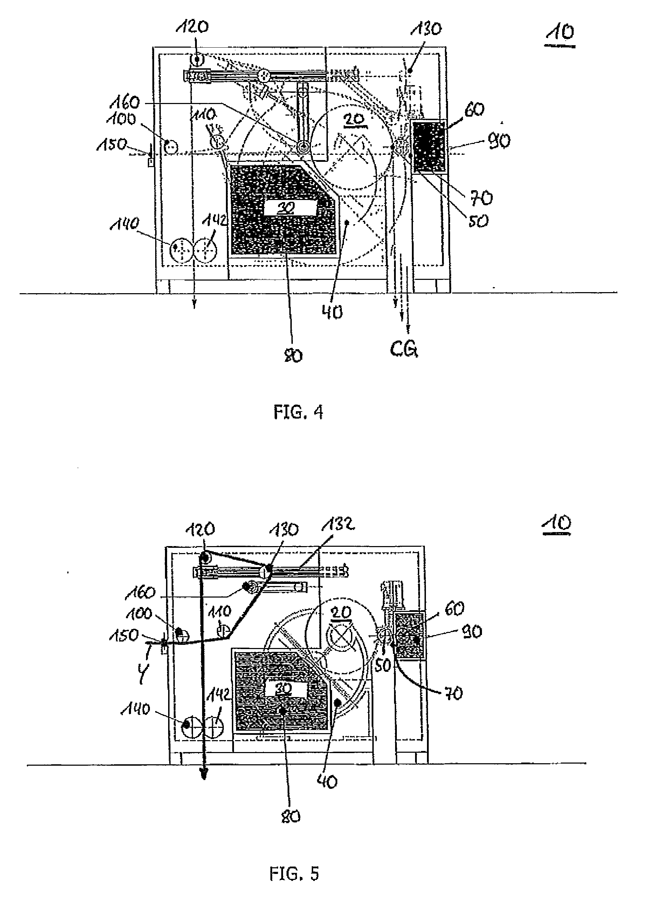

FIG. 1 zeigt die schematische Zeichnung einer Vorrichtung 10 zur Herstellung von geschnittenen Glasfasern CG (siehe auch z. B. FIG. 4), insbesondere einen automatisch wechselnden Chopper 10 gemäß der vorliegenden Erfindung.

Eine Vielzahl Glasfasergarne Y, die durch mehrere, z.B. gemeinsame Spinndüsen 5 aufweisende Spinnmaschinen 1 erzeugt werden, werden in den automatischen Chopper 10 übergeben und diesem für den Schneidvorgang zugeführt.

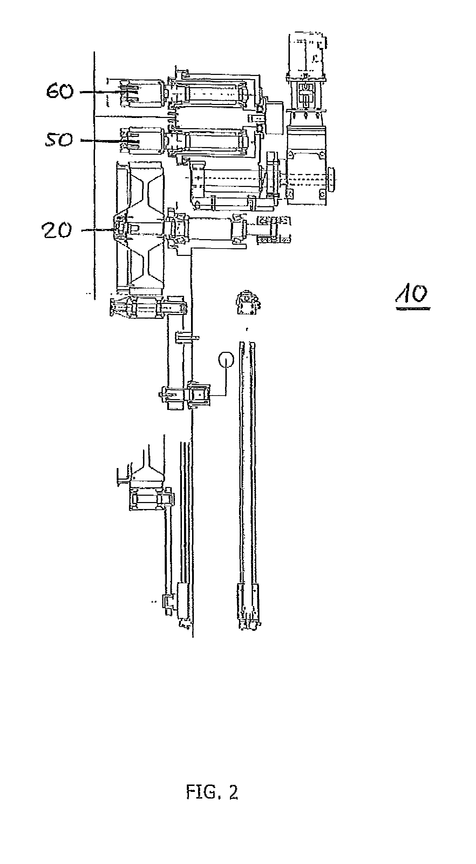

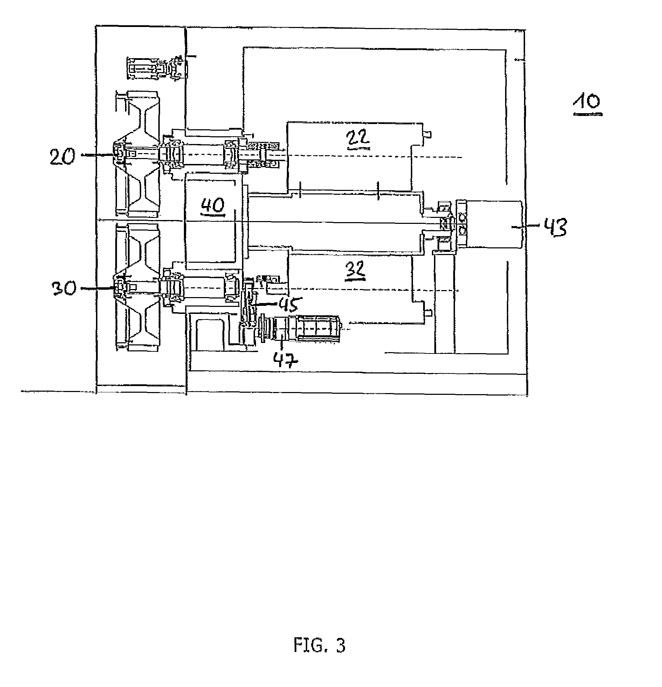

Wie aus FIG. 2 und FIG. 3 abgeleitet werden kann, umfasst die Vorrichtung 10 zumindest ein erstes Treibrad 20 und zumindest ein zweites Treibrad 30, einen ersten Messerkopf 50 und einen zweiten Messerkopf 60, wobei die Vorrichtung 10 so gestaltet ist, dass sie in zumindest einer ersten Betriebsart arbeitsfähig ist, bei der zumindest eines der Treibräder 20, 30 und zumindest einer der Messerköpfe 50, 60 imstande sind, Glasfasern CG aus dem durch die Spinnmaschinen 1 produzierten Endlosgarn Y inline zu schneiden.

Wie in FIG. 2 gezeigt wird, ist das in Arbeitsstellung befindliche Treibrad 20 mit dem ebenfalls in Arbeitsstellung befindlichen Messerkopf 50 in Eingriff gebracht. Der Messerkopf 50 wird durch Reibung und die Rotation des Treibrades 20 rotiert.

FIG. 3 zeigt, dass das Treibrad 20 durch einen Spindelantrieb 22 und das Treibrad 30 durch den Spindelantrieb 32 angetrieben werden kann. Die Stromversorgung für die Spindelantriebe 22, 32 wird über einen Schleifring 43 hergestellt.

Das erste Treibrad 20 und das zweite Treibrad 30 sind auf einem Treibrad-Drehteller 40 montiert, wobei der Treibrad-Drehteller 40 aus einer ersten Stellung in eine zweite Stellung und von der zweiten Stellung in die erste Stellung bewegbar ist.

Die erste Stellung des Treibrad-Drehtellers 40, die in FIG. 2 und FIG. 3 gezeigt wird, ist eine Stellung, bei der sich das erste Treibrad 20 in einer Arbeitsstellung zum unmittelbaren Schneiden von Glasfasern CG befindet. Der Treibrad-Drehteller 40 kann durch einen Servomotor, hier ein Drehtellerantrieb 47 mit Riemen, rotiert werden. Der Treibrad-Drehteller 40 kann rotiert werden, wobei es eine zweite Stellung des Treibrad-Drehtellers 40 gibt, in der sich das zweite Treibrad 30 in Arbeitsstellung zum inline Schneiden von Glasfasern CG befindet. Die Achse des Treibrad-Drehtellers, die Achse des ersten Treibrades und die Achse des zweiten Treibrades sind im Wesentlichen parallel. Zur Bestimmung der tatsächlichen Position des Treibrad-Drehtellers ist ein Indexbolzen 45 vorgesehen.

Außerdem ist die erste Stellung des Treibrad-Drehtellers 40 eine Position, in der sich das zweite Treibrad 30 in Ruhestellung befindet und abnehmbar ist; und die zweite Stellung des Treibrad-Drehtellers 40 ist eine Position, in der sich das erste Treibrad 20 in Ruhestellung befindet und abnehmbar ist.

FIG. 4 zeigt eine weitere schematische Zeichnung des Choppers 10 nach der vorliegenden Erfindung.

Wie in FIG. 4 gezeigt wird, ist das zweite Treibrad 30 in der ersten Stellung des Treibrad-Drehtellers 40 durch eine Sicherheitstür 80 zugänglich, und das erste Treibrad 20 ist in der zweiten Stellung des Treibrad-Drehtellers 40 durch die Sicherheitstür 80 zugänglich. Die Sicherheitstür 80 kann bei Betrieb des Choppers 10 geöffnet werden, um das hinter der Sicherheitstür 80 liegende Treibrad abzubauen bzw. auszutauschen.

Der erste Messerkopf 50 und der zweite Messerkopf 60 sind auf einem Messerkopf-Drehteller 70 montiert, wobei der Messerkopf-Drehteller 70 aus einer ersten Stellung in eine zweite Stellung und aus der zweiten Stellung in die erste Stellung drehbar ist. Der Messerkopf-Drehteller 70 ist um eine Messerkopf-Drehtellerachse drehbar und der erste Messerkopf 50 ist um eine erste Messerkopfachse drehbar, und der zweite Messerkopf 60 ist um eine zweite Messerkopfachse drehbar, wobei die Achse des Messerkopf-Drehtellers, die Achse des ersten Messerkopfes und die Achse des zweiten Messerkopfes im Wesentlichen parallel sind.

Die erste Stellung des Messerkopf-Drehtellers 70 ist eine Position, in der sich der erste Messerkopf 50 in Arbeitsstellung zum unmittelbaren Schneiden von Glasfasern CG befindet, und die zweite Stellung des Messerkopf-Drehtellers 70 ist eine Position, in der sich der zweite Messerkopf 60 in Arbeitsstellung zum inline Schneiden von Glasfasern CG befindet.

Die erste Stellung des Messerkopf-Drehtellers 70 ist eine Position, in der sich der zweite Messerkopf 60 in einer Ruhestellung befindet und abnehmbar ist, und die zweite Stellung des Messerkopf-Drehtellers 70 ist eine Position, in der sich der erste Messerkopf 50 in einer Ruhestellung befindet und abnehmbar ist. In der ersten Stellung des Messerkopf-Drehtellers 70 ist der zweite Messerkopf 60 durch die Sicherheitstür 90 zugänglich, und in der zweiten Stellung des Messerkopf-Drehtellers 70 ist der erste Messerkopf 50 durch die Sicherheitstür 90 zugänglich.

Der Chopper 10 weist einen Schwingkamm 150 auf, der so gestaltet ist, dass das ankommende Garn Y durch den Schwingkamm 150 geführt wird. Außerdem umfasst der Chopper 10 nicht angetriebene Rollen 100, 110, 120, 130, wobei die nicht angetriebenen Rollen 100, 110, 120, 130 so gestaltet sind, dass das Garn Y durch die nicht angetriebenen Rollen 100, 110, 120, 130 geführt werden kann. Die nicht angetriebenen Rollen 110, 130 sind bewegbare, nicht angetriebene Rollen 110, 130 und sind aus zumindest einer ersten Stellung in eine zweite Stellung und umgekehrt bewegbar.

Darüber hinaus ist eine Gruppe von zwei Führungswalzen 140, 142 vorgesehen, wobei die Führungswalzen 140, 142 so gestaltet sind, dass sie imstande sind, das Garn Y vorzugsweise beim automatischen Anlegen des Garnes Y zu ziehen. Zusätzlich umfasst der Chopper 10 eine bewegliche Druckrolle 160, die aus einer ersten Stellung in eine zweite Stellung und umgekehrt bewegbar ist, wobei die bewegbare Druckrolle 160 so gestaltet ist, dass das Garn bei Bewegung aus der ersten Stellung in die zweite Stellung in das in Betrieb befindliche Treibrad 20, 30 zum inline Schneiden von Glasfasern CG, d. h. beim automatischen Anlegen des Garnes Y (siehe dazu FIG. 5 bis FIG. 7), geführt wird.

FIG. 5 bis FIG. 7 zeigen schematische Zeichnungen des automatischen Choppers 10 nach der vorliegenden Erfindung während des automatischen Anlegens eines ersten Faserbündels, bzw. das in den Chopper 10 einzuleitende erste Garn Y.

FIG. 5 zeigt das automatische Anlegen des ersten Faserbündels in einem ersten Schritt. Das Garn Y wird durch den Schwingkamm 150 und von den nicht angetriebenen Rollen 100, 110 um die bewegliche, nicht angetriebene Rolle 130 und um die nicht angetriebene Rolle 120 herum nach unten auf die Führungswalzen 140, 142 geführt. Die Führungswalzen 140, 142 bewirken einen Transport der Fadenschar in einen Abfallschacht.

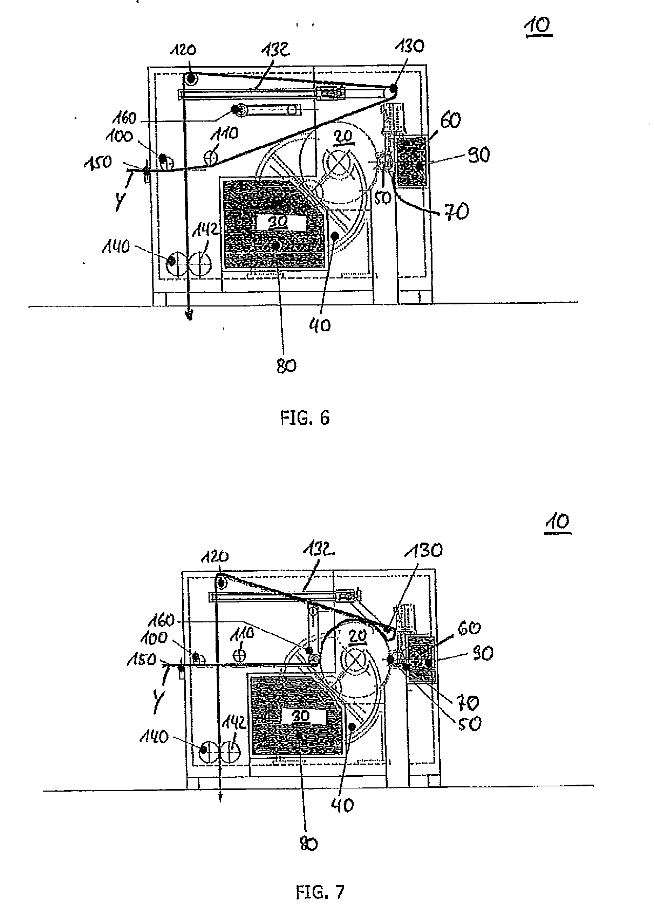

Wie aus FIG. 6 und FIG. 7 abgeleitet werden kann, ist die bewegbare, nicht angetriebene Rolle 130 so gestaltet, dass das Garn Y geführt wird durch Bewegen aus der ersten Stellung in die zweite Stellung in das in Arbeitsposition befindliche Treibrad 20 zum unmittelbaren Schneiden von Glasfasern CG, vorzugsweise beim automatischen Ingangsetzen des Einsetz- und Schneidvorgangs des Garnes Y.

FIG. 6 zeigt das automatische Auflegen eines ersten Faserbündels in einem zweiten Schritt. Die geradlinig bewegbare, nicht angetriebene Rolle 130 wird längs ihrer Führungsschiene 132 aus der in FIG. 5 gezeigten ersten Stellung in eine in FIG. 6 gezeigte zweite Stellung bewegt. Diese zweite Stellung befindet sich über dem ersten Treibrad 20, und das Garn Y wird am Anfang in das Treibrad 20 eingeführt, indem die bewegbare, nicht angetriebene Rolle 130 in die zweite Stellung bewegt wird.

FIG. 7 zeigt das automatische Auflegen eines ersten Faserbündels in einem dritten Schritt. Die bewegbare, nicht angetriebene Rolle 130 wird aus der in FIG. 6 gezeigten zweiten Stellung in Richtung des ersten Treibrades 20 abgelenkt, wodurch das Garn Y auf das Treibrad 20 aufgelegt wird. Zur Unterstützung des Auflegens wird die bewegbare Druckrolle 160 in Richtung des ersten Treibrades 20 abgelenkt, indem das Garn Y ebenfalls auf das Treibrad 20 aufgelegt wird.

Dadurch wird das Garn Y automatisch zu dem Messerkopf 50 (60) transportiert und der Schneidvorgang beginnt.

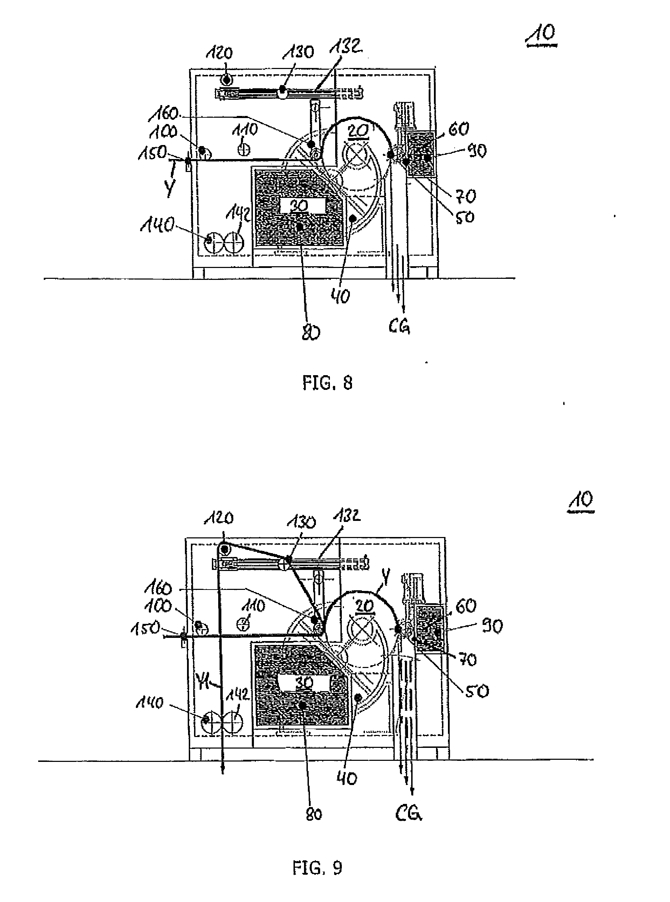

FIG. 8 zeigt den Chopper 10 während des Schneidvorgangs. Wenn das Schneiden in Betrieb gesetzt ist, wird das Garn Y durch den Schwingkamm 150, die nicht angetriebene Rolle 100 und die bewegbare Druckrolle 160 geführt. Anschließend wird das Garn Y auf das in Betrieb befindliche Treibrad 20 aufgelegt und mit dem ersten Messerkopf 50 in Eingriff gebracht. Das Garn Y wird zu geschnittenen Glasfasern CG geschnitten, indem es durch das in Eingriff gebrachte Treibrad 20 und den Messerkopf 50 hindurchgeführt wird.

FIG. 9 bis FIG. 11 zeigen schematische Zeichnungen des automatischen Choppers 10 nach der vorliegenden Erfindung während des automatischen Anlegens einer Fadenschar während des Schneidens.

FIG. 9 zeigt den Vorgang der automatischen Wicklung beim Schneiden in einem ersten Schritt. Ein erstes Garn Y wird geschnitten, wie es mit Bezug auf FIG. 8 gezeigt und beschrieben ist. Ein zweites Garn Y1 wird ähnlich dem in FIG. 5 bis FIG. 7 gezeigten ersten Faserbündel, jedoch mit geringen Unterschieden wie im Folgenden beschrieben, automatisch angelegt.

Das zweite Garn Y1 wird durch den Schwingkamm 150 und durch die nicht angetriebene Rolle 100 um die bewegbare Druckrolle 160, die bewegbare, nicht angetriebene Rolle 130 und die nicht angetriebene Rolle 120 herum nach unten auf die Führungswalzen 140, 142 geführt. Die Führungswalzen 140, 142 bewirken einen automatischen Abzug in den Abfallschacht.

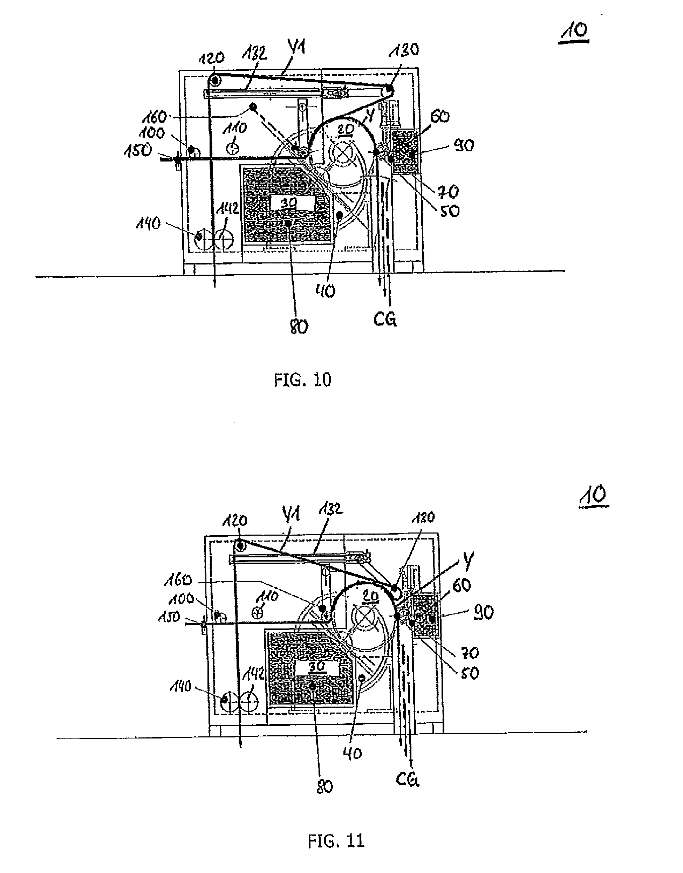

FIG. 10 zeigt den Vorgang des automatischen Anlegens einer Fadenschar während des Schneidens in einem zweiten Schritt. Die geradlinig bewegbare, nicht angetriebene Rolle 130 wird längs ihrer Führungsschiene 132 aus der in FIG. 9 gezeigten ersten Stellung in eine in FIG. 10 gezeigte zweite Stellung bewegt. Diese zweite Stellung befindet sich über dem ersten Treibrad 20, und das Garn Y1 wird am Anfang an das Treibrad 20 angelegt, indem die bewegbare, nicht angetriebene Rolle 130 in die zweite Stellung bewegt wird.

Die bewegbare, nicht angetriebene Rolle 130 wird aus der in FIG. 10 gezeigten zweiten Stellung in Richtung des ersten Treibrades 20 abgelenkt, wodurch das Garn Y an das Treibrad 20 angelegt wird, wie es von FIG. 11 abgeleitet werden kann. So zeigt FIG. 11 den Vorgang des automatischen Anlegens oder Auflegens beim Schneidvorgang eines ersten Faserbündels in einem dritten Schritt.

Nach den in FIG. 9 bis FIG. 11 gezeigten Schritten wird der Chopper 10 wieder, wie in FIG. 8 gezeigt, d. h. in der Betriebsart Schneiden betrieben.

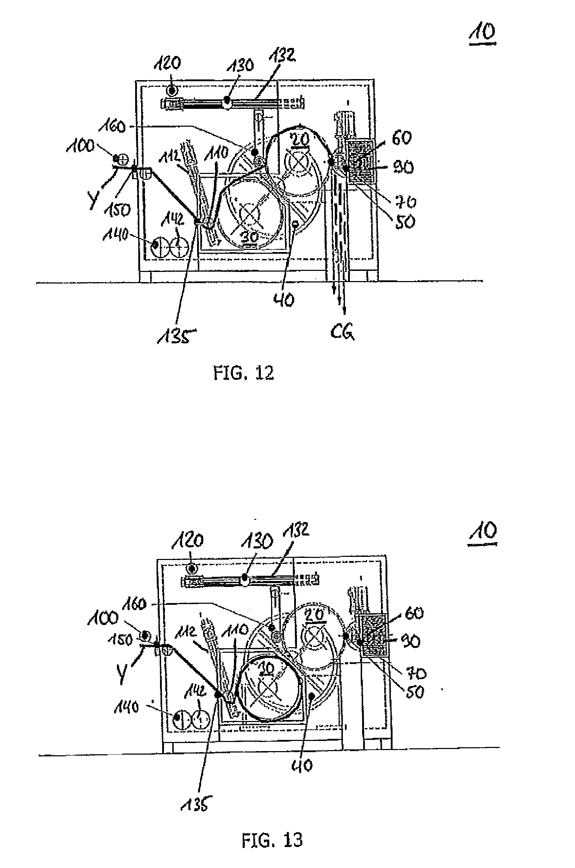

FIG. 12 zeigt den Chopper 10 nach der vorliegenden Erfindung während der automatischen Umschaltung vom ersten Treibrad 20 auf das zweite Treibrad 30 in einem ersten Schritt. Dadurch läuft das zweite Treibrad 30 mit Produktionsgeschwindigkeit, d. h. insbesondere der Geschwindigkeit des ersten Treibrades 20.

Die bewegbare, nicht angetriebene Rolle 110 ist so gestaltet, dass das Garn Y durch Bewegung aus der ersten Stellung in die zweite Stellung in das in Ruhestellung befindliche Treibrad 30, das auf Produktionsgeschwindigkeit läuft, während des automatischen Umschaltungsprozesses geführt wird, wenn vom ersten Treibrad 20 zum zweiten Treibrad 30, wie in FIG. 12 bis FIG. 15 gezeigt ist, gewechselt wird.

Die bewegbare, nicht angetriebene Rolle 110 bewegt sich längs ihrer Führungsschiene 112 nach unten, wodurch zu Anfang das Garn Y auf das zweite Treibrad 30 angelegt wird. Somit wird das Garn Y durch den Schwingkamm 150, die nicht angetriebene Rolle 110, das Treibrad 30 und anschließend durch die mit dem ersten Treibrad 20 in Eingriff gebrachte, bewegbare Druckrolle 160 geführt. Das Garn wird dann durch das erste Treibrad zum Messerkopf 50 geführt, der sich in Betrieb befindet und das Garn Y zu geschnittenen Glasfasern CG schneidet.

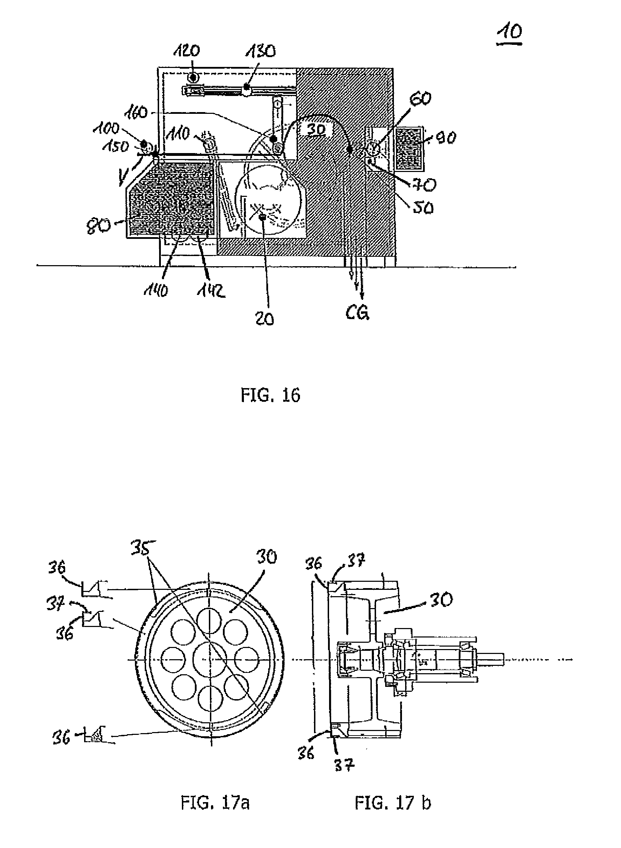

FIG. 13 zeigt den Chopper 10 während der automatischen Umschaltung in einem zweiten Schritt. Das Garn Y wird um das zweite Treibrad 30 gewickelt, um das erste Treibrad aus dem Betrieb zu nehmen. Deshalb bewegt der hintere Garnabweiser 135 das Garn Y zu einer Greifvorrichtung 35, und die Greifvorrichtung 35 (siehe auch FIG. 17a, b) fängt es auf und das Garn Y läuft dann auf dem zweiten Treibrad 30.

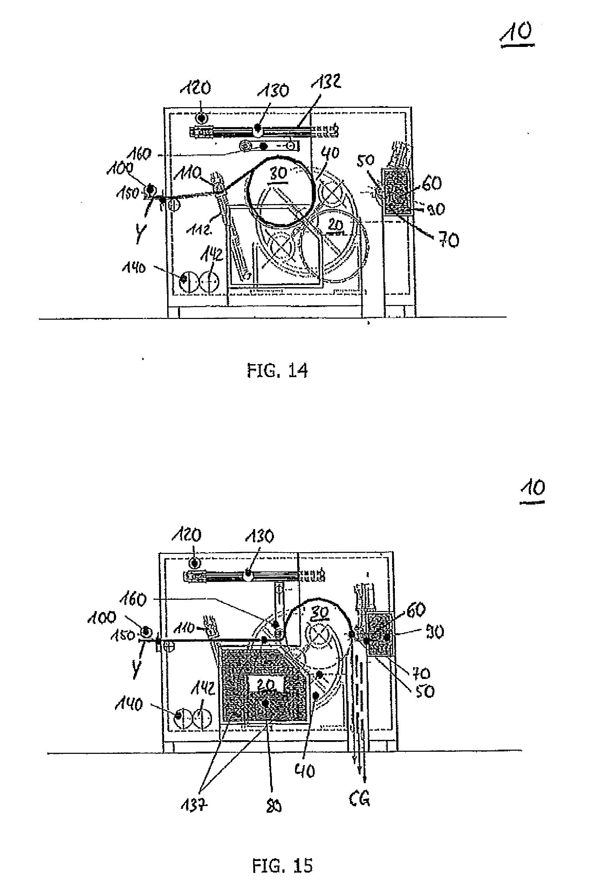

FIG. 14 zeigt den Chopper 10 während der automatischen Umschaltung in einem dritten Schritt. Dadurch schwenkt die bewegbare Druckrolle 160 und der Messerkopf-Drehteller 70 mit seinen Messerköpfen 50, 60 aus dem Kollisionskreis des rotierenden Treibrad-Drehtellers 30 mit dem Treibrad 30 und dem Treibrad 20 aus. Die nicht angetriebene Rolle 110 wird in ihrer oberen Stellung bewegt und das Treibrad 30 in die Arbeitsstellung übertragen.

FIG. 15 zeigt den Chopper 10 während der automatischen Umschaltung in einem vierten Schritt, bei dem sich jetzt beide Drehtellerköpfe 40 und 70 in der richtigen Stellung zum Betrieb befinden. Der vordere Garnabweiser 137 bewegt das Garn Y in die normale Arbeitsstellung. Die Druckrolle 160 und der Messerkopf 50 schwenken zurück in die Arbeitsstellung.

FIG. 16 zeigt in einer weiteren schematischen Zeichnung den Chopper 10 nach dem automatischen Umschaltvorgang von FIG. 12 bis FIG. 15. Wie in Fig. 16 gezeigt wird, befindet sich der Schneidvorgang in Betrieb und die Sicherheitstür 80 ist geöffnet, um das erste Treibrad 20 auszuwechseln. Inzwischen wird das Garn Y durch das zweite Treibrad 30 und den Messerkopf 50 geschnitten. Es ist möglich, dass während des dritten Schrittes des automatischen Umschaltvorgangs, wie in FIG. 14 gezeigt, der erste und der zweite Messerkopf 50, 60 ihre Positionen wechseln, so dass der erste Messerkopf 50 auch in der in FIG. 16 dargestellten Situation ausgewechselt werden kann.

FIG. 17a zeigt eine Vorderansicht des Treibrades 30, wobei anzumerken ist, dass das Treibrad 20 identisch ist. Wie in FIG. 17a ersichtlich ist, weist das Treibrad 30 zwei Fangeinrichtungen 35 auf, die bei der automatischen Umschaltung verwendet werden (siehe FIG. 13). Die Fangeinrichtungen 35 sind Teil der Begrenzung des Treibrades 30 und ohne eine Abdeckwand 37 der Begrenzungswand 36 ausgebildet. Fig. 17b zeigt das Treibrad 30 von FIG. 17a in einer Seitenansicht.

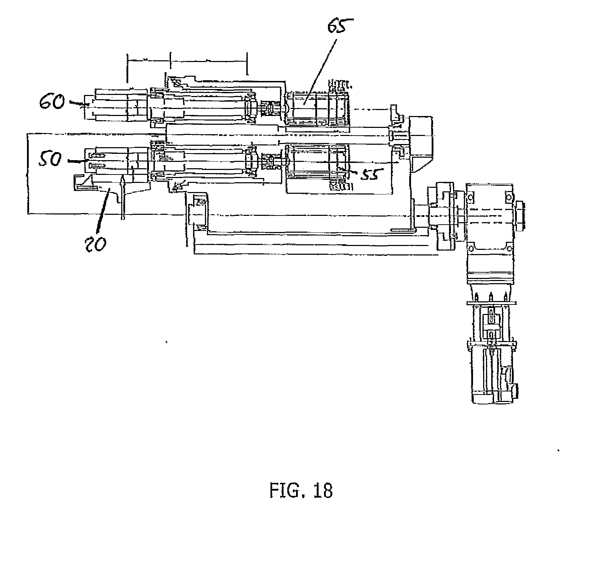

FIG. 18 zeigt eine alternative Ausführungsform der Antriebe 55, 65 der Schneidköpfe 50, 60. Der Unterschied zwischen den in FIG. 2 bis 16 gezeigten Ausführungsformen besteht darin, dass die Ausführungsform von FIG. 18 zwei kleine Servomotoren 55, 65 aufweist, die die Schneidköpfe 50, 60 antreiben.

## Patentansprüche

1. Vorrichtung (10) zur Herstellung von geschnittenen Glasfasern (CG), wobei die Vorrichtung (10) zumindest ein erstes Treibrad (20) und zumindest ein zweites Treibrad (30), einen ersten Messerkopf (50) und einen zweiten Messerkopf (60) aufweist, wobei die Vorrichtung (10) derart beschaffen ist, dass sie in mindestens einer ersten Betriebsart betriebsfähig ist, bei der zumindest eines der Treibräder (20, 30) und zumindest einer der Messerköpfe (50, 60) imstande sind, Glasfasern (CG) von einem Garn (Y), vorzugsweise von einem Endlosgarn (Y), inline zu schneiden.

2. Vorrichtung nach Anspruch 1,
**dadurch gekennzeichnet, dass**
das erste Treibrad (20) und das zweite Treibrad (30) auf einem Treibrad-Drehteller (40) montiert sind, wobei der Treibrad-Drehteller (40) aus einer ersten Stellung in eine zweite Stellung und aus der zweiten Stellung in die erste Stellung bewegbar ist.

3. Vorrichtung nach Anspruch 2,
**dadurch gekennzeichnet, dass**
die erste Stellung des Treibrad-Drehtellers (40) eine Position ist, in der sich das erste Treibrad (20) in einer Arbeitsstellung zum inline Schneiden von Glasfasern (CG) befindet und/oder dass die zweite Stellung des Treibrad-Drehtellers (40) eine Position ist, in der sich das zweite Treibrad (30) in einer Arbeitsstellung zum inline Schneiden von Glasfasern (CG) befindet.

4. Vorrichtung nach Anspruch 2 oder 3,
**dadurch gekennzeichnet, dass**
die erste Stellung des Treibrad-Drehtellers (40) eine Position ist, bei der sich das zweite Treibrad (30) in einer Ruhestellung befindet und abnehmbar ist und/oder dass die zweite Stellung des Treibrad-Drehtellers (40) eine Position ist, bei der sich das erste Treibrad (20) in einer Ruhestellung befindet und abnehmbar ist, wobei das zweite Treibrad (30) vorzugsweise in der ersten Stellung des Treibrad-Drehtellers (40) durch zumindest eine Sicherheitstür (80) zugänglich ist und/oder wobei das erste Treibrad (20) vorzugsweise in der zweiten Stellung des Treibrad-Drehtellers (40) durch die zumindest eine Sicherheitstür (80) zugänglich ist.

5. Vorrichtung nach einem der Ansprüche 2 bis 4,
**dadurch gekennzeichnet, dass**
der Treibrad-Drehteller (40) um eine Treibrad-Drehtellerachse rotierbar ist und dass das erste Treibrad (20) um eine erste Treibradachse drehbar ist und das zweite Treibrad (30) um eine zweite Treibradachse drehbar ist, wobei die Treibrad-Drehtellerachse, die erste Treibradachse und die zweite Treibradachse im Wesentlichen parallel sind.

6. Vorrichtung nach einem der vorhergehenden Ansprüche,
**dadurch gekennzeichnet, dass**
der erste Messerkopf (50) und der zweite Messerkopf (60) auf einem Messerkopf-Drehteller (70) montiert sind, wobei der Messerkopf-Drehteller (70) aus einer ersten Stellung in eine zweite Stellung und aus der zweiten Stellung in die erste Stellung bewegbar ist.

7. Vorrichtung nach Anspruch 6,
**dadurch gekennzeichnet, dass**
die erste Stellung des Messerkopf-Drehtellers (70) eine Position ist, in der sich der erste Messerkopf (50) in einer Arbeitsstellung zum inline Schneiden von Glasfasern (CG) befindet und/oder dass die zweite Stellung des Messerkopf-Drehtellers (70) eine Position ist, in der sich der zweite Messerkopf (60) in einer Arbeitsstellung zum inline Schneiden von Glasfasern (CG) befindet.

8. Vorrichtung nach Anspruch 6 oder 7,
**dadurch gekennzeichnet, dass**
die erste Stellung des Messerkopf-Drehtellers (70) eine Position ist, in der sich der zweite Messerkopf (60) in einer Ruhestellung befindet und abnehmbar ist und/oder dass die zweite Stellung des Messerkopf-Drehtellers (70) eine Position ist, in der sich der erste Messerkopf (50) in einer Ruhestellung befindet und abnehmbar ist, wobei der zweite Messerkopf (60) vorzugsweise in der ersten Stellung des Messerkopf-Drehtellers (70) durch zumindest eine Sicherheitstür (90) zugänglich ist und/oder wobei der erste Messerkopf (50) vorzugsweise in der zweiten Stellung des Messerkopf-Drehtellers (70) durch die zumindest eine Sicherheitstür (90) zugänglich ist.

9. Vorrichtung nach einem der Ansprüche 6 bis 8,
**dadurch gekennzeichnet, dass**
der Messerkopf-Drehteller (70) um eine Messerkopf-Drehtellerachse rotierbar ist und dass der erste Messerkopf (50) um eine erste Messerkopfachse rotierbar ist, und der zweite Messerkopf (60) um eine zweite Messerkopfachse rotierbar ist, wobei die Messerkopf-Drehtellerachse, die erste Messerkopfachse und die zweite Messerkopfachse im Wesentlichen parallel sind.

10. Vorrichtung (10) nach einem der vorhergehenden Ansprüche,
**dadurch gekennzeichnet, dass**
die Vorrichtung (10) zumindest eine nicht angetriebene Rolle (100, 110, 120, 130) aufweist, wobei die nicht angetriebene Rolle (100, 110, 120, 130) so gestaltet ist, dass das Garn (Y) durch die nicht angetriebene Rolle (100, 110, 120, 130) geführt werden kann.

11. Vorrichtung (10) nach Anspruch 10,
**dadurch gekennzeichnet, dass**
die Vorrichtung (10) zumindest eine bewegbare, nicht angetriebene Rolle (110, 130) aufweist, die aus zumindest einer ersten Stellung in eine zweite Stellung und umgekehrt bewegbar ist.

12. Vorrichtung (10) nach Anspruch 11,
**dadurch gekennzeichnet, dass**
die bewegbare, nicht angetriebene Rolle (110) so gestaltet ist, dass das Garn (Y) durch Bewegung aus der ersten Stellung in die zweite Stellung in das sich in der Ruhestellung befindliche Treibrad (20,30) vorzugsweise während des automatischen Umschaltvorgangs beim Wechseln vom ersten Treibrad (20) zum zweiten Treibrad (30) oder vom zweiten Treibrad (30) zum ersten Treibrad (20), geführt wird und/oder dass die bewegbare, nicht angetriebene Rolle (130) so gestaltet ist, dass das Garn (Y) durch Bewegung aus der ersten Stellung in die zweite Stellung in das in der Arbeitsstellung befindliche Treibrad (20, 30) geführt wird, um Glasfasern (CG), vorzugsweise beim automatischen Ingangsetzen des Einsetz- und Schneidvorgangs des Garnes (Y) inline zu schneiden.

13. Vorrichtung (10) nach einem der vorhergehenden Ansprüche,
**dadurch gekennzeichnet, dass**
die Vorrichtung (10) zumindest eine Gruppe von mindestens zwei Führungswalzen (140, 142) aufweist, wobei die Führungswalzen (140, 142) so gestaltet sind, dass sie (140, 142) in der Lage sind, das Garn (Y) vorzugsweise beim automatischen Ingangsetzen des Einsetz- und Schneidvorgangs des Garnes (Y) zu ziehen.

14. Vorrichtung (10) nach einem der vorhergehenden Ansprüche, insbesondere nach einem der Ansprüche 3 bis 13,
**dadurch gekennzeichnet, dass**
die Vorrichtung (10) zumindest eine bewegbare Druckrolle (160) aufweist, die aus zumindest einer ersten Stellung in eine zweite Stellung und umgekehrt bewegbar ist, wobei vorzugsweise die bewegbare Druckrolle (160) derart gestaltet ist, dass das Garn durch Bewegung aus der ersten Stellung in die zweite Stellung in das in Betriebstellung befindliche Treibrad (20, 30) zum inline Schneiden von Glasfasern (CG) vorzugsweise beim automatischen Ingangsetzen des Einsetz- und Schneidvorgangs des Garnes (Y) geführt wird.

15. Vorrichtung (10) nach einem der vorhergehenden Ansprüche,
**dadurch gekennzeichnet, dass**
die Vorrichtung zumindest einen Schwingkamm (150) aufweist, der so gestaltet ist, dass das ankommende Garn (Y) durch den Schwingkamm (150) geführt wird.
